# EUROPEAN PATENT APPLICATION

(11) **EP 4 528 379 A1**
(43) Date of publication of application: **26.03.2025**
(21) Application number: 24158557.9
(22) Date of filing: 20.02.2024
(51) Int. Cl.: G03G 5/00, G03G 5/10, G03G 5/14

(54) **ELECTROPHOTOGRAPHIC PHOTORECEPTOR, METHOD OF PRODUCING ELECTROPHOTOGRAPHIC PHOTORECEPTOR, PROCESS CARTRIDGE, AND IMAGE FORMING APPARATUS**

(30) Priority: 22.09.2023 JP 2023158502
(71) Applicant: FUJIFILM Business Innovation Corp., Minato-ku Tokyo (JP)
(72) Inventor: SAITO, Yohei, Ebina-shi, Kanagawa (JP); KORENAGA, Jiro, Ebina-shi, Kanagawa (JP); OGAWA, Hiroaki, Ebina-shi, Kanagawa (JP); SUZUKI, Takuma, Ebina-shi, Kanagawa (JP); KAI, Hiroshi, Ebina-shi, Kanagawa (JP); IMAMURA, Chisato, Ebina-shi, Kanagawa (JP)
(74) Representative: Kurig, Thomas

(57) **Abstract**

An electrophotographic photoreceptor includes a conductive substrate, an undercoat layer disposed on the conductive substrate, and a photosensitive layer disposed on the undercoat layer, in which an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and the undercoat layer has a layer thickness of 10 µm or greater.

## Description

### BACKGROUND OF THE INVENTION

### (i) Field of the Invention

The present disclosure relates to an electrophotographic photoreceptor, a method of producing an electrophotographic photoreceptor, a process cartridge, and an image forming apparatus.

### (ii) Description of Related Art

JP2019-095510A discloses an electrophotographic photoreceptor including a substrate and a photosensitive layer on the substrate, in which a coefficient of determination of a regression line of a data group with a relative cumulative frequency of 10% to 50%, in a relative cumulative frequency distribution curve obtained from the power spectrum derived by performing fast Fourier transform on the data group showing the height of the surface roughness curve of the substrate, is 0.970 or greater, a pitch with a relative cumulative frequency of 90% is 200 µm or less, and a root mean square slope RΔq defined in JIS B 0601 :2001 obtained from the roughness curve is 0.08 or greater.

JP2007-292772A discloses a substrate for an electrophotographic photoreceptor, evaluated by a method of evaluating the surface roughness of a component for an image forming apparatus, the method including determining a cross-sectional curve defined in JIS B 0601 for a surface state of a component for an image forming apparatus, performing multi-resolution analysis of positional data rows at equal interval positions on the cross-sectional curve in a surface roughness direction, and evaluating the state of the surface roughness at least based on the results.

### SUMMARY OF THE INVENTION

An object of the present disclosure is to provide an electrophotographic photoreceptor that forms an image with excellent graininess as compared with an electrophotographic photoreceptor in which an undercoat layer has a layer thickness of less than 10 µm and does not contain metal oxide particles.

Specific means for achieving the above-described object includes the following aspects.
<1> According to a first aspect of the present disclosure, there is provided an electrophotographic photoreceptor including: a conductive substrate; an undercoat layer disposed on the conductive substrate; and a photosensitive layer disposed on the undercoat layer, in which an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and the undercoat layer has a layer thickness of 10 µm or greater.
<2> According to a second aspect of the present disclosure, there is provided the electrophotographic photoreceptor according to <1>, in which the undercoat layer may have a layer thickness of 20 µm or greater.
<3> According to a first aspect of the present disclosure, there is provided an electrophotographic photoreceptor including: a conductive substrate; an undercoat layer disposed on the conductive substrate; and a photosensitive layer disposed on the undercoat layer, in which an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and the undercoat layer may contain metal oxide particles.
<4> According to a fourth aspect of the present disclosure, there is provided the electrophotographic photoreceptor according to <3>, in which the metal oxide particles may include at least one selected from the group consisting of zinc oxide particles, titanium oxide particles, and tin oxide particles.
<5> According to a fifth aspect of the present disclosure, there is provided the electrophotographic photoreceptor according to <3> or <4>, in which the metal oxide particles may have an average particle diameter of 10 nm or greater and 80 nm or less.
<6> According to a sixth aspect of the present disclosure, there is provided the electrophotographic photoreceptor according to any one of <3> to <5>, in which a mass proportion of the metal oxide particles in the undercoat layer may be 60% by mass or greater and 95% by mass or less.
<7> According to a seventh aspect of the present disclosure, there is provided a method of producing the electrophotographic photoreceptor according to any one of <1> to <6>, the method including: removing all layers on the conductive substrate from the electrophotographic photoreceptor after use with a water jet to reproduce the conductive substrate; forming an undercoat layer on the reproduced conductive substrate; and forming a photosensitive layer on the undercoat layer.
<8> According to an eighth aspect of the present disclosure, there is provided a process cartridge including: the electrophotographic photoreceptor according to any one of <1> to <6>, in which the process cartridge is attachable to and detachable from an image forming apparatus.
<9> According to a ninth aspect of the present disclosure, there is provided an image forming apparatus including: the electrophotographic photoreceptor according to any one of <1> to <6>; a charging device that charges a surface of the electrophotographic photoreceptor; an electrostatic latent image forming device that forms an electrostatic latent image on the charged surface of the electrophotographic photoreceptor; a developing device that develops the electrostatic latent image formed on the surface of the electrophotographic photoreceptor with a developer containing a toner to form a toner image; and a transfer device that transfers the toner image to a surface of a recording medium.

According to <1>, it is possible to provide an electrophotographic photoreceptor that forms an image with excellent graininess as compared with an electrophotographic photoreceptor in which an undercoat layer has a layer thickness of less than 10 µm and does not contain metal oxide particles.

According to <2>, it is possible to provide an electrophotographic photoreceptor that forms an image with excellent graininess as compared with an electrophotographic photoreceptor in which an undercoat layer has a layer thickness of less than 20 µm.

According to <3>, <4>, <5>, or <6>, it is possible to provide an electrophotographic photoreceptor that forms an image with excellent graininess as compared with an electrophotographic photoreceptor in which an undercoat layer has a layer thickness of less than 10 µm and does not contain metal oxide particles.

According to <7>, it is possible to provide a method of producing an electrophotographic photoreceptor that forms an image with excellent graininess.

According to <8>, it is possible to provide a process cartridge that forms an image with excellent graininess as compared with a process cartridge including an electrophotographic photoreceptor in which an undercoat layer has a layer thickness of less than 10 µm and does not contain metal oxide particles.

According to <9>, it is possible to provide an image forming apparatus that forms an image with excellent graininess as compared with an image forming apparatus including an electrophotographic photoreceptor in which an undercoat layer has a layer thickness of less than 10 µm and does not contain metal oxide particles.

### BRIEF DESCRIPTION OF THE DRAWINGS

Exemplary embodiment(s) of the present invention will be described in detail based on the following figures, wherein:
Fig. 1 is a partial cross-sectional view showing an example of a layer configuration of an electrophotographic photoreceptor according to the present exemplary embodiment;
Fig. 2 is a partial cross-sectional view showing another example of a layer configuration of an electrophotographic photoreceptor according to the present exemplary embodiment;
Fig. 3 is a schematic configuration view showing an example of an image forming apparatus according to the present exemplary embodiment; and
Fig. 4 is a schematic configuration view showing another example of an image forming apparatus according to the present exemplary embodiment.

### DETAILED DESCRIPTION OF THE INVENTION

Hereinafter, exemplary embodiments of the present disclosure will be described. The following descriptions and examples merely illustrate the exemplary embodiments, and do not limit the scope of the exemplary embodiments.

In the present disclosure, a numerical range shown using "to" indicates a range including numerical values described before and after "to" as a minimum value and a maximum value.

In a numerical range described in a stepwise manner in the present disclosure, an upper limit value or a lower limit value described in a certain numerical range may be replaced with an upper limit value or a lower limit value in another numerical range described in a stepwise manner. Further, in a numerical range described in the present disclosure, an upper limit value or a lower limit value described in the numerical range may be replaced with a value shown in Examples.

In the present disclosure, the meaning of the term "step" includes not only an independent step but also a step whose intended purpose is achieved even in a case where the step is not clearly distinguished from other steps.

In the present disclosure, in a case where an exemplary embodiment is described with reference to drawings, the configuration of the exemplary embodiment is not limited to the configuration shown in the drawings. In addition, the sizes of members in each drawing are conceptual and the relative relation in the sizes between the members is not limited thereto.

In the present disclosure, each component may include a plurality of kinds of substances corresponding to each component. In the present disclosure, in a case where a plurality of kinds of substances corresponding to each component in a composition are present, the amount of each component in the composition indicates the total amount of the plurality of kinds of substances present in the composition unless otherwise specified.

In the present disclosure, each component may include a plurality of kinds of particles corresponding to each component. In a case where a plurality of kinds of particles corresponding to each component are present in a composition, the particle diameter of each component indicates the value of a mixture of the plurality of kinds of particles present in the composition, unless otherwise specified.

In the present disclosure, an alkyl group and an alkylene group are any of linear, branched, or cyclic unless otherwise specified.

In the present disclosure, a hydrogen atom in an organic group, an aromatic ring, a linking group, an alkyl group, an alkylene group, an aryl group, an aralkyl group, an alkoxy group, an aryloxy group, or the like may be substituted with a halogen atom.

In the present disclosure, in a case where a compound is represented by a structural formula, the compound may be represented by a structural formula in which symbols (C and H) representing a carbon atom and a hydrogen atom in a hydrocarbon group and/or a hydrocarbon chain are omitted.

In the present disclosure, the term "constitutional unit" of a copolymer or a resin has the same definition as that for a monomer unit.

In the present disclosure, the term "axial direction" of an electrophotographic photoreceptor denotes a direction in which a rotation axis of the electrophotographic photoreceptor extends, and the term "circumferential direction" of the electrophotographic photoreceptor denotes a rotation direction of the electrophotographic photoreceptor.

### <Electrophotographic Photoreceptor>

The electrophotographic photoreceptor according to the present exemplary embodiment (hereinafter, also referred to as "photoreceptor") includes a conductive substrate, an undercoat layer disposed on the conductive substrate, and a photosensitive layer disposed on the undercoat layer.

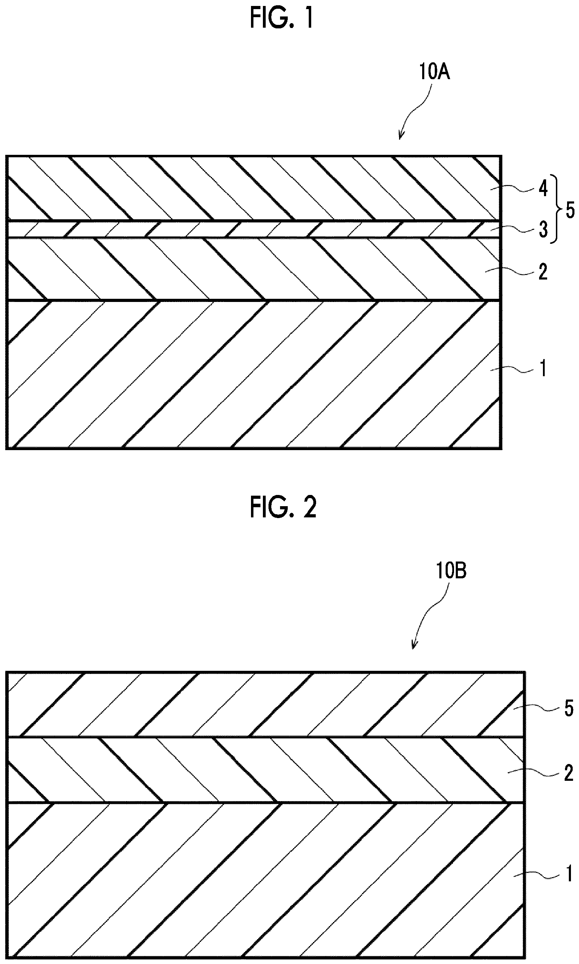

Fig. 1 is a partial cross-sectional view schematically showing an example of a layer configuration of a photoreceptor according to the present exemplary embodiment. A photoreceptor 10A shown in Fig. 1 includes a lamination type photosensitive layer. The photoreceptor 10A has a structure in which an undercoat layer 2, a charge generation layer 3, and a charge transport layer 4 are laminated in this order on a conductive substrate 1, and the charge generation layer 3 and the charge transport layer 4 constitute a photosensitive layer 5 (so-called function separation type photosensitive layer). The photoreceptor 10A may include an interlayer (not shown) between the undercoat layer 2 and the charge generation layer 3. The photoreceptor 10A may include a protective layer (not shown) on the charge transport layer 4.

Fig. 2 is a partial cross-sectional view schematically showing another example of a layer configuration of a photoreceptor according to the present exemplary embodiment. A photoreceptor 10B shown in Fig. 2 includes a single layer type photosensitive layer. The photoreceptor 10B has a structure in which the undercoat layer 2 and the photosensitive layer 5 are laminated in this order on the conductive substrate 1. The photoreceptor 10B may include an interlayer (not shown) between the undercoat layer 2 and the photosensitive layer 5. The photoreceptor 10B may include a protective layer (not shown) on the photosensitive layer 5.

In the conductive substrate of the photoreceptor according to the present exemplary embodiment, the integrated value of the intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less.

In the present disclosure, the integrated value of the intensity in a period range of 0.01 mm or greater and 0.1 mm or less in a power spectrum obtained by performing fast Fourier transform on a roughness curve of an outer peripheral surface of the conductive substrate in an axial direction is referred to as "integrated value S".

The integrated value S is determined by the following (1) to (4).
(1) All the layers are removed from the photoreceptor to expose the outer peripheral surface of the conductive substrate.
   Each layer of the photoreceptor is removed by dipping the photoreceptor in an organic solvent that dissolves the binder resin of each layer but does not corrode the conductive substrate.
(2) T roughness curve of the outer peripheral surface of the conductive substrate in the axial direction is determined. The roughness curve is a roughness curve defined in JIS B 0601:2013.
   The roughness of the outer peripheral surface of the conductive substrate is measured in an environment of a temperature of 23°C and a relative humidity of 55% using a contact type surface roughness measuring machine (SURFCOM 1400A, Tokyo Seimitsu Co., Ltd.). The conductive substrate is scanned in the axial direction at a scanning speed of 0.3 mm/sec with a measurement length of 2.5 mm and a cutoff value of 0.8 mm. The stylus has a conical shape with an apex angle of 90°, the curvature radius of the tip is 5 µm, and the tip material is diamond. The measurement is performed on three measurement sites which are a central portion in the axial direction and both end portions of the image forming region. The roughness curve is determined from the measured values at the three sites.
(3) The power spectrum is derived by performing fast Fourier transform on the roughness curve.
   Microsoft Excel is used as the analysis software. 4,096 points of parameters in the height direction are extracted from the roughness curve for each pitch of 0.6 µm. The data of the 4,096 points is converted such that the average of the height data of the 4,096 points reaches zero. The parameter values of the 4,096 points are subjected to fast Fourier transform, and a power spectrum in which the horizontal axis represents the period (mm) and the vertical axis represents the intensity is derived.
(4) The intensity in a period range of 0.01 mm or greater and 0.1 mm or less in the power spectrum is integrated, and the integrated value S is determined. The integrated value S is an integrated value of power spectrum values in a period range of 0.01 mm or greater and 0.1 mm or less.

The present exemplary embodiment provides applications for reuse of the conductive substrate reproduced from the photoreceptor after use. As a result of examination conducted by the present inventors, it has been found that micro unevenness occurs on the surface of the conductive substrate in the step of removing all the layers from the photoreceptor after use and the graininess of an image is degraded due to the micro unevenness of the surface of the conductive substrate (for example, graininess is observed from a halftone image or a gradation image). It is presumed that since the unevenness on the surface of the conductive substrate is reflected on the outer peripheral surface of the photoreceptor, the unevenness appears on the outer peripheral surface of the photoreceptor.

As a result of further examination conducted by the present inventors, the integrated value S in the power spectrum obtained by performing fast Fourier transform on the roughness curve of the conductive substrate is derived as an index of the surface state of the conductive substrate, which leads to degradation of the graininess of an image, and it has been found that the graininess of an image is degraded in a case where the integrated value S is 0.02 or greater. The integrated value S is, for example, preferably 0.10 or less, and it is preferable that the integrated value S decreases.

The present exemplary embodiment provides a photoreceptor according to the first exemplary embodiment and a photoreceptor according to the second exemplary embodiment as means for addressing the problem (degradation of the graininess of an image) caused by the conductive substrate with an integrated value S of 0.02 or greater and 0.10 or less. In the present disclosure, in a case of description common to the first exemplary embodiment and the second exemplary embodiment, both forms are collectively referred to as the present exemplary embodiment.

The photoreceptor according to the first exemplary embodiment includes a conductive substrate, an undercoat layer disposed on the conductive substrate, and a photosensitive layer disposed on the undercoat layer, the integrated value S is 0.02 or greater and 0.10 or less, and the undercoat layer has a layer thickness of 10 µm or greater.

In the first exemplary embodiment, since the undercoat layer has a layer thickness of 10 µm or greater, unevenness of the surface of the conductive substrate is unlikely to be reflected on the outer peripheral surface of the photoreceptor, and thus an image with excellent graininess is formed. From the present viewpoint, the layer thickness of the undercoat layer is, for example, preferably 15 µm or greater, more preferably 18 µm or greater, and still more preferably 20 µm or greater.

In the first exemplary embodiment, from the viewpoint of suppressing the residual charge, the layer thickness of the undercoat layer is, for example, preferably 50 µm or less, more preferably 40 µm or less, and still more preferably 30 µm or less.

The layer thickness of the undercoat layer is an arithmetic average of the measured values measured by an electromagnetic film thickness meter, and the measurement is performed on four measurement sites at intervals of 90° in the circumferential direction at the center of the photoreceptor in the axial direction.

In the first exemplary embodiment, the undercoat layer may or may not contain a filler. In a case where the undercoat layer contains a filler in the first exemplary embodiment, the filler is, for example, preferably inorganic particles, more preferably metal oxide particles, and still more preferably at least one selected from the group consisting of zinc oxide particles, titanium oxide particles, and tin oxide particles. The inorganic particles may be subjected to a surface treatment with a silane coupling agent, a titanate-based coupling agent, an aluminum-based coupling agent, a surfactant or the like. An electron-accepting compound may adhere to the surfaces of the inorganic particles. Examples of the exemplary embodiments of the surface treatment agent and the electron-accepting compound are as described below.

The photoreceptor according to the second exemplary embodiment includes a conductive substrate, an undercoat layer disposed on the conductive substrate, and a photosensitive layer disposed on the undercoat layer, the integrated value S is 0.02 or greater and 0.10 or less, and the undercoat layer contains metal oxide particles.

In the second exemplary embodiment, since the undercoat layer contains metal oxide particles, unevenness of the surface of the conductive substrate is unlikely to be reflected on the outer peripheral surface of the photoreceptor, and thus an image with excellent graininess is formed.

Examples of the metal oxide particles include zinc oxide particles, titanium oxide particles, tin oxide particles, and zirconium oxide particles. The metal oxide particles contained in the undercoat layer may be used alone or in combination of two or more kinds thereof.

From the viewpoint of the electrical properties of the photoreceptor, the metal oxide particles are, for example, preferably at least one selected from the group consisting of zinc oxide particles, titanium oxide particles, and tin oxide particles and more preferably zinc oxide particles.

The metal oxide particles may be subjected to a surface treatment with a silane coupling agent, a titanate-based coupling agent, an aluminum-based coupling agent, a surfactant, or the like. The form of the surface treatment agent is as described below.

An electron-accepting compound may adhere to the surfaces of the metal oxide particles. The form of the electron-accepting compound and the method of making the electron-accepting compound adhere to the surfaces of the metal oxide particles are as described below.

From the viewpoint of suppressing the unevenness of the surface of the conductive substrate from being reflected on the outer peripheral surface of the photoreceptor and forming an image with excellent graininess, the average particle diameter of the metal oxide particles contained in the undercoat layer is, for example, preferably 5 nm or greater and 100 nm or less, more preferably 10 nm or greater and 80 nm or less, and still more preferably 20 nm or greater and 50 nm or less.

The average particle diameter of the metal oxide particles is determined by the following measuring method.

The metal oxide particles are taken out from the undercoat layer. Examples of a method of taking out the metal oxide particles from the undercoat layer include a method of dipping the undercoat layer peeled off from the photoreceptor in an organic solvent that dissolves a binder resin and dissolving the binder resin in the organic solvent to take out the metal oxide particle and a method of heating the undercoat layer peeled off from the photoreceptor to about 800°C and eliminating the binder resin to take out the metal oxide particles.

The value obtained by observing the metal oxide particles with a scanning electron microscope, determining the equivalent circle diameters of randomly selected 100 primary particles, and arithmetically averaging the equivalent circle diameters is defined as the average particle diameter.

From the viewpoint of suppressing the unevenness of the surface of the conductive substrate from being reflected on the outer peripheral surface of the photoreceptor and forming an image with excellent graininess, the mass proportion of the metal oxide particles in the undercoat layer is, for example, preferably 60% by mass or greater and 95% by mass or less, more preferably 70% by mass or greater and 95% by mass or less, and still more preferably 80% by mass or greater and 90% by mass or less.

In the second exemplary embodiment, from the viewpoint that the graininess of an image is more excellent, the layer thickness of the undercoat layer is, for example, preferably 5 µm or greater, more preferably 10 µm or greater, still more preferably 15 µm or greater, even still more preferably 18 µm or greater, and even still more preferably 20 µm or greater.

In the second exemplary embodiment, from the viewpoint of suppressing the residual charge, the layer thickness of the undercoat layer is, for example, preferably 50 µm or less, more preferably 40 µm or less, and still more preferably 30 µm or less.

Hereinafter, each layer of the photoreceptor will be described in detail.

### [Conductive Substrate]

Examples of the conductive substrate include metal plates containing metals (such as aluminum, copper, zinc, chromium, nickel, molybdenum, vanadium, indium, gold, and platinum) or alloys (such as stainless steel), metal rolls, metal drums, and metal belts. Further, examples of the conductive substrate include paper, a resin film, a belt, and the like obtained by being coated, vapor-deposited or laminated with a conductive compound (such as a conductive polymer or indium oxide), a metal (such as aluminum, palladium, or gold) or an alloy. Here, the term "conductive" denotes that the volume resistivity is less than 1×10¹³ Ω·cm.

Examples of the exemplary embodiment of the conductive substrate include a conductive substrate reproduced by removing all the layers on the conductive substrate from the photoreceptor after use. Examples of a method of removing all the layers or each layer on the conductive substrate include a water jet method (the details will be described below).

The photoreceptor after use includes a conductive substrate used for producing this photoreceptor, and the conductive substrate may be any known conductive substrate. The conductive substrate may be a conductive substrate that has been subjected to wet honing, centerless grinding, an anodizing treatment, an acid treatment, a boehmite treatment, or the like.

### [Undercoat Layer]

The undercoat layer is, for example, a layer containing inorganic particles and a binder resin.

Examples of the inorganic particles include inorganic particles having a powder resistance (volume resistivity) of 1×10² Ω·cm or greater and 1×10¹¹ Ω·cm or less.

Among these, as the inorganic particles having the above-described resistance value, for example, metal oxide particles such as tin oxide particles, titanium oxide particles, zinc oxide particles, and zirconium oxide particles may be used, and zinc oxide particles are particularly preferable.

The specific surface area of the inorganic particles measured by the BET method may be, for example, 10 m²/g or greater.

The volume average particle diameter of the inorganic particles may be, for example, 50 nm or greater and 2,000 nm or less (for example, preferably 60 nm or greater and 1,000 nm or less).

In a case where the undercoat layer contains inorganic particles, the content of the inorganic particles is, for example, preferably 60% by mass or greater and 95% by mass or less, more preferably 70% by mass or greater and 95% by mass or less, and still more preferably 80% by mass or greater and 90% by mass or less with respect to the entire undercoat layer.

The inorganic particles may be subjected to a surface treatment. As the inorganic particles, inorganic particles subjected to different surface treatments or inorganic particles having different particle diameters may be used in the form of a mixture of two or more kinds thereof.

Examples of the surface treatment agent include a silane coupling agent, a titanate-based coupling agent, an aluminum-based coupling agent, and a surfactant. In particular, for example, a silane coupling agent is preferable, and a silane coupling agent containing an amino group is more preferable.

Examples of the silane coupling agent containing an amino group include 3-aminopropyltriethoxysilane, N-2-(aminoethyl)-3-aminopropyltrimethoxysilane, N-2-(aminoethyl)-3-aminopropylmethyldimethoxysilane, and N,N-bis(2-hydroxyethyl)-3-aminopropyltriethoxysilane, but are not limited thereto.

The silane coupling agent may be used in the form of a mixture of two or more kinds thereof. For example, a silane coupling agent containing an amino group and another silane coupling agent may be used in combination. Examples of other silane coupling agents include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl)-3-aminopropyltriethoxysilane, and 3-chloropropyltrimethoxysilane, but are not limited thereto.

The surface treatment method using a surface treatment agent may be any method as long as the method is a known method, and any of a dry method or a wet method may be used.

The treatment amount of the surface treatment agent is, for example, preferably 0.5% by mass or greater and 10% by mass or less with respect to the amount of the inorganic particles.

Here, the undercoat layer may contain an electron-accepting compound (acceptor compound) together with the inorganic particles, for example, from the viewpoint of enhancing the long-term stability of the electrical properties and the carrier blocking properties.

Examples of the electron-accepting compound include electron-transporting substances, for example, a quinone-based compound such as chloranil or bromanil; a tetracyanoquinodimethane-based compound; a fluorenone compound such as 2,4,7-trinitrofluorenone or 2,4,5,7-tetranitro-9-fluorenone; an oxadiazole-based compound such as 2-(4-biphenyl)-5-(4-t-butylphenyl)-1,3,4-oxadiazole, 2,5-bis(4-naphthyl)-1,3,4-oxadiazole, or 2,5-bis(4-diethylaminophenyl)-1,3,4-oxadiazole; a xanthone-based compound; a thiophene compound; a diphenoquinone compound such as 3,3',5,5'-tetra-t-butyldiphenoquinone; and a benzophenone compound.

In particular, as the electron-accepting compound, for example, a compound having an anthraquinone structure is preferable. As the compound having an anthraquinone structure, for example, a hydroxyanthraquinone compound, an aminoanthraquinone compound, or an aminohydroxyanthraquinone compound is preferable, and specifically, for example, anthraquinone, alizarin, quinizarin, anthrarufin, or purpurin is preferable.

The electron-accepting compound may be contained in the undercoat layer in a state of being dispersed with inorganic particles or in a state of being attached to the surface of each inorganic particle.

Examples of the method of attaching the electron-accepting compound to the surface of the inorganic particle include a dry method and a wet method.

The dry method is, for example, a method of attaching the electron-accepting compound to the surface of each inorganic particle by adding the electron-accepting compound dropwise to inorganic particles directly or by dissolving the electron-accepting compound in an organic solvent while stirring the inorganic particles with a mixer having a large shearing force and spraying the mixture together with dry air or nitrogen gas. The electron-accepting compound may be added dropwise or sprayed, for example, at a temperature lower than or equal to the boiling point of the solvent. After the dropwise addition or the spraying of the electron-accepting compound, the compound may be further baked at 100°C or higher. The baking is not particularly limited as long as the temperature and the time are adjusted such that the electrophotographic characteristics can be obtained.

The wet method is, for example, a method of attaching the electron-accepting compound to the surface of each inorganic particle by adding the electron-accepting compound to inorganic particles while dispersing the inorganic particles in a solvent using a stirrer, ultrasonic waves, a sand mill, an attritor, or a ball mill, stirring or dispersing the mixture, and removing the solvent. The solvent removing method is carried out by, for example, filtration or distillation so that the solvent is distilled off. After removal of the solvent, the mixture may be further baked at 100°C or higher. The baking is not particularly limited as long as the temperature and the time are adjusted such that the electrophotographic characteristics can be obtained. In the wet method, the moisture contained in the inorganic particles may be removed before the electron-accepting compound is added, and examples thereof include a method of removing the moisture while stirring and heating the moisture in a solvent and a method of removing the moisture by azeotropically boiling the moisture with a solvent.

The electron-accepting compound may be attached to the surface before the inorganic particles are subjected to a surface treatment with a surface treatment agent or simultaneously with the surface treatment performed on the inorganic particles with a surface treatment agent.

The content of the electron-accepting compound may be, for example, 0.01% by mass or greater and 20% by mass or less and preferably 0.01% by mass or greater and 10% by mass or less with respect to the amount of the inorganic particles.

Examples of the binder resin used for the undercoat layer include known polymer compounds such as an acetal resin (such as polyvinyl butyral), a polyvinyl alcohol resin, a polyvinyl acetal resin, a casein resin, a polyamide resin, a cellulose resin, gelatin, a polyurethane resin, a polyester resin, an unsaturated polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a urea resin, a phenol resin, a phenol-formaldehyde resin, a melamine resin, a urethane resin, an alkyd resin, and an epoxy resin; a zirconium chelate compound; a titanium chelate compound; an aluminum chelate compound; a titanium alkoxide compound; an organic titanium compound; and known materials such as a silane coupling agent.

Examples of the binder resin used for the undercoat layer include a charge-transporting resin containing a charge-transporting group, and a conductive resin (such as polyaniline).

Among these, as the binder resin used for the undercoat layer, for example, a resin insoluble in a coating solvent of the upper layer is preferable, and a resin obtained by reaction between a curing agent and at least one resin selected from the group consisting of a thermosetting resin such as a urea resin, a phenol resin, a phenol-formaldehyde resin, a melamine resin, a urethane resin, an unsaturated polyester resin, an alkyd resin, or an epoxy resin; a polyamide resin, a polyester resin, a polyether resin, a methacrylic resin, an acrylic resin, a polyvinyl alcohol resin, and a polyvinyl acetal resin is particularly preferable.

In a case where these binder resins are used in combination of two or more kinds thereof, the mixing ratio thereof is set as necessary.

The undercoat layer may contain various additives for improving the electrical properties, the environmental stability, and the image quality.

Examples of the additives include known materials, for example, an electron-transporting pigment such as a polycyclic condensed pigment or an azo-based pigment, a zirconium chelate compound, a titanium chelate compound, an aluminum chelate compound, a titanium alkoxide compound, an organic titanium compound, and a silane coupling agent. The silane coupling agent is used for a surface treatment of the inorganic particles as described above, but may be further added to the undercoat layer as an additive.

Examples of the silane coupling agent serving as an additive include vinyltrimethoxysilane, 3-methacryloxypropyl-tris(2-methoxyethoxy)silane, 2-(3,4-epoxycyclohexyl)ethyltrimethoxysilane, 3-glycidoxypropyltrimethoxysilane, vinyltriacetoxysilane, 3-mercaptopropyltrimethoxysilane, 3-aminopropyltriethoxysilane, N-2-(aminoethyl)-3-aminopropyltrimethoxysilane, N-2-(aminoethyl)-3-aminopropylmethyldimethoxysilane, N,N-bis(2-hydroxyethyl)-3-aminopropyltriethoxysilane, and 3-chloropropyltrimethoxysilane.

Examples of the zirconium chelate compound include zirconium butoxide, ethyl zirconium acetoacetate, zirconium triethanolamine, acetylacetonate zirconium butoxide, ethyl zirconium butoxide acetoacetate, zirconium acetate, zirconium oxalate, zirconium lactate, zirconium phosphonate, zirconium octanoate, zirconium naphthenate, zirconium laurate, zirconium stearate, zirconium isostearate, zirconium butoxide methacrylate, stearate zirconium butoxide, and isostearate zirconium butoxide.

Examples of the titanium chelate compound include tetraisopropyl titanate, tetranormal butyl titanate, a butyl titanate dimer, tetra(2-ethylhexyl) titanate, titanium acetylacetonate, polytitanium acetylacetonate, titanium octylene glycolate, titanium lactate ammonium salt, titanium lactate, titanium lactate ethyl ester, titanium triethanol aminate, and polyhydroxy titanium stearate.

Examples of the aluminum chelate compound include aluminum isopropylate, monobutoxyaluminum diisopropylate, aluminum butyrate, diethylacetoacetate aluminum diisopropylate, and aluminum tris(ethylacetoacetate).

These additives may be used alone or in the form of a mixture or a polycondensate of a plurality of compounds.

The undercoat layer may have, for example, a Vickers hardness of 35 or greater.

The surface roughness (ten-point average roughness) of the undercoat layer may be adjusted, for example, to 1/2 from 1/(4n) (n represents a refractive index of an upper layer) of a laser wavelength λ for exposure to be used to suppress moire fringes.

Resin particles or the like may be added to the undercoat layer to adjust the surface roughness. Examples of the resin particles include silicone resin particles and crosslinked polymethyl methacrylate resin particles. Further, the surface of the undercoat layer may be polished to adjust the surface roughness. Examples of the polishing method include buff polishing, a sandblast treatment, wet honing, and a grinding treatment.

The formation of the undercoat layer is not particularly limited, and a known forming method is used. For example, a coating film of a coating solution for forming an undercoat layer in which the above-described components are added to a solvent is formed, and the coating film is dried and, as necessary, heated.

Examples of the solvent for preparing the coating solution for forming an undercoat layer include known organic solvents such as an alcohol-based solvent, an aromatic hydrocarbon solvent, a halogenated hydrocarbon solvent, a ketone-based solvent, a ketone alcohol-based solvent, an ether-based solvent, and an ester-based solvent.

Specific examples of these solvents include typical organic solvents such as methanol, ethanol, n-propanol, iso-propanol, n-butanol, benzyl alcohol, methyl cellosolve, ethyl cellosolve, acetone, methyl ethyl ketone, cyclohexanone, methyl acetate, ethyl acetate, n-butyl acetate, dioxane, tetrahydrofuran, methylene chloride, chloroform, chlorobenzene, and toluene.

Examples of the method of dispersing the inorganic particles when preparing the coating solution for forming an undercoat layer include known methods such as a roll mill, a ball mill, a vibration ball mill, an attritor, a sand mill, a colloid mill, and a paint shaker.

Examples of the method of coating the conductive substrate with the coating solution for forming an undercoat layer include typical coating methods such as a blade coating method, a wire bar coating method, a spray coating method, a dip coating method, a bead coating method, an air knife coating method, and a curtain coating method.

In the first exemplary embodiment and the second exemplary embodiment, it is preferable that the layer thickness of the undercoat layer is, for example, in the above-described ranges.

### [Interlayer]

The interlayer is, for example, a layer containing a resin. Examples of the resin used for the interlayer include a polymer compound, for example, an acetal resin (such as polyvinyl butyral), a polyvinyl alcohol resin, a polyvinyl acetal resin, a casein resin, a polyamide resin, a cellulose resin, gelatin, a polyurethane resin, a polyester resin, a methacrylic resin, an acrylic resin, a polyvinyl chloride resin, a polyvinyl acetate resin, a vinyl chloride-vinyl acetate-maleic anhydride resin, a silicone resin, a silicone-alkyd resin, a phenol-formaldehyde resin, or a melamine resin.

The interlayer may be a layer containing an organometallic compound. Examples of the organometallic compound used for the interlayer include an organometallic compound containing metal atoms such as zirconium, titanium, aluminum, manganese, and silicon.

The compounds used for the interlayer may be used alone or in the form of a mixture or a polycondensate of a plurality of compounds.

Among these, it is preferable that the interlayer is, for example, a layer containing an organometallic compound having a zirconium atom or a silicon atom.

The formation of the interlayer is not particularly limited, and a known forming method is used. For example, a coating film of a coating solution for forming an interlayer in which the above-described components are added to a solvent is formed, and the coating film is dried and, as necessary, heated.

Examples of the coating method of forming the interlayer include typical methods such as a dip coating method, a push-up coating method, a wire bar coating method, a spray coating method, a blade coating method, an air knife coating method, and a curtain coating method.

The layer thickness of the interlayer is set to be, for example, preferably in a range of 0.1 µm or greater and 3 µm or less. The interlayer may be used as the undercoat layer.

### [Charge Generation Layer]

The charge generation layer is, for example, a layer containing a charge generation material and a binder resin. Further, the charge generation layer may be a deposition layer of the charge generation material. The deposition layer of the charge generation material is, for example, preferable in a case where an incoherent light source such as a light emitting diode (LED) or an organic electro-luminescence (EL) image array is used.

Examples of the charge generation material include an azo pigment such as bisazo or trisazo; a fused ring aromatic pigment such as dibromoanthanthrone; a perylene pigment; a pyrrolopyrrole pigment; a phthalocyanine pigment; zinc oxide; and trigonal selenium.

Among these, for example, a metal phthalocyanine pigment or a metal-free phthalocyanine pigment is preferably used as the charge generation material in order to deal with laser exposure in a near infrared region. Specifically, for example, hydroxygallium phthalocyanine; chlorogallium phthalocyanine; dichlorotin phthalocyanine; and titanyl phthalocyanine are more preferable.

On the other hand, for example, a fused ring aromatic pigment such as dibromoanthanthrone; a thioindigo-based pigment; a porphyrazine compound; zinc oxide; trigonal selenium; or a bisazo pigment is preferable as the charge generation material in order to deal with laser exposure in a near ultraviolet region.

The above-described charge generation material may also be used even in a case where an incoherent light source such as an LED or an organic EL image array having a center wavelength of light emission at 450 nm or greater and 780 nm or less is used.

Meanwhile, in a case where an n-type semiconductor such as a fused ring aromatic pigment, a perylene pigment, or an azo pigment is used as the charge generation material, a dark current is unlikely to be generated, and image defects referred to as black spots can be suppressed even in a case where a thin film is used as the photosensitive layer. The n-type is determined by the polarity of the flowing photocurrent using a typically used time-of-flight method, and a material in which electrons more easily flow as carriers than positive holes is determined as the n-type.

The binder resin used for the charge generation layer is selected from a wide range of insulating resins, and the binder resin may be selected from organic photoconductive polymers such as poly-N-vinylcarbazole, polyvinyl anthracene, polyvinylpyrene, and polysilane.

Examples of the binder resin include a polyvinyl butyral resin, a polyarylate resin (a polycondensate of bisphenols and aromatic divalent carboxylic acid), a polycarbonate resin, a polyester resin, a phenoxy resin, a vinyl chloride-vinyl acetate copolymer, a polyamide resin, an acrylic resin, a polyacrylamide resin, a polyvinylpyridine resin, a cellulose resin, a urethane resin, an epoxy resin, casein, a polyvinyl alcohol resin, and a polyvinylpyrrolidone resin. Here, the term "insulating" denotes that the volume resistivity is 10¹³ Ω·cm or greater. These binder resins may be used alone or in the form of a mixture of two or more kinds thereof.

The blending ratio between the charge generation material and the binder resin is, for example, preferably in a range of 10:1 to 1:10 in terms of the mass ratio.

The charge generation layer may also contain other known additives.

The formation of the charge generation layer is not particularly limited, and a known forming method is used. For example, a coating film of a coating solution for forming a charge generation layer in which the above-described components are added to a solvent is formed, and the coating film is dried and, as necessary, heated. The charge generation layer may be formed by vapor deposition of the charge generation material. The formation of the charge generation layer by vapor deposition is, for example, particularly appropriate in a case where a fused ring aromatic pigment or a perylene pigment is used as the charge generation material.

Examples of the solvent for preparing the coating solution for forming a charge generation layer include methanol, ethanol, n-propanol, n-butanol, benzyl alcohol, methyl cellosolve, ethyl cellosolve, acetone, methyl ethyl ketone, cyclohexanone, methyl acetate, n-butyl acetate, dioxane, tetrahydrofuran, methylene chloride, chloroform, chlorobenzene, and toluene. These solvents are used alone or in the form of a mixture of two or more kinds thereof.

As a method of dispersing particles (for example, the charge generation material) in the coating solution for forming a charge generation layer, for example, a media disperser such as a ball mill, a vibration ball mill, an attritor, a sand mill, or a horizontal sand mill, or a medialess disperser such as a stirrer, an ultrasonic disperser, a roll mill, or a high-pressure homogenizer is used. Examples of the high-pressure homogenizer include a collision type high-pressure homogenizer in which a dispersion liquid is dispersed by a liquid-liquid collision or a liquid-wall collision in a high-pressure state, and a penetration type high-pressure homogenizer in which a dispersion liquid is dispersed by causing the liquid to penetrate through a micro-flow path in a high-pressure state. During the dispersion, it is effective to set the average particle diameter of the charge generation material in the coating solution for forming a charge generation layer to 0.5 µm or less, for example, preferably 0.3 µm or less, and more preferably 0.15 µm or less.

Examples of the method of coating the undercoat layer (or the interlayer) with the coating solution for forming a charge generation layer include typical methods such as a blade coating method, a wire bar coating method, a spray coating method, a dip coating method, a bead coating method, an air knife coating method, and a curtain coating method.

The layer thickness of the charge generation layer is set to be, for example, preferably in a range of 0.1 µm or greater and 5.0 µm or less and more preferably in a range of 0.2 µm or greater and 2.0 µm or less.

### [Charge Transport Layer]

The charge transport layer is, for example, a layer containing a charge transport material and a binder resin. The charge transport layer may be a layer containing a polymer charge transport material.

Examples of the charge transport material include a quinone-based compound such as p-benzoquinone, chloranil, bromanil, or anthraquinone; a tetracyanoquinodimethane-based compound; a fluorenone compound such as 2,4,7-trinitrofluorenone; a xanthone-based compound; a benzophenone-based compound; a cyanovinyl-based compound; and an electron-transporting compound such as an ethylene-based compound. Examples of the charge transport material include a positive hole-transporting compound such as a triarylamine-based compound, a benzidine-based compound, an arylalkane-based compound, an aryl-substituted ethylene-based compound, a stilbene-based compound, an anthracene-based compound, or a hydrazone-based compound. These charge transport materials may be used alone or in combination of two or more kinds thereof, but are not limited thereto.

From the viewpoint of the charge mobility, for example, a triarylamine derivative represented by Structural Formula (a-1) or a benzidine derivative represented by Structural Formula (a-2) is preferable as the charge transport material.

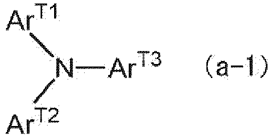

In Structural Formula (a-1), Ar^{T1}, Ar^{T2}, and Ar^{T3} each independently represent a substituted or unsubstituted aryl group, -C₆H₄-C(R^{T4})=C(R^{T5})(R^{T6}), or -C₆H₄-CH=CH-CH=C(R^{T7})(R^{T8}). R^{T4}, R^{T5}, R^{T6}, R^{T7}, and R^{T8} each independently represent a hydrogen atom, a substituted or unsubstituted alkyl group, or a substituted or unsubstituted aryl group.

Examples of the substituent of each group described above include a halogen atom, an alkyl group having 1 or more and 5 or less carbon atoms, and an alkoxy group having 1 or more and 5 or less carbon atoms. Further, examples of the substituent of each group described above include a substituted amino group substituted with an alkyl group having 1 or more and 3 or less carbon atoms.

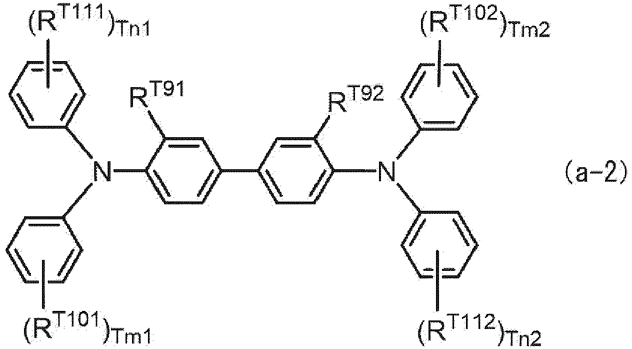

In Structural Formula (a-2), R^{T91} and R^{T92} each independently represent a hydrogen atom, a halogen atom, an alkyl group having 1 or more and 5 or less carbon atoms, or an alkoxy group having 1 or more and 5 or less carbon atoms. R^{T101}, R^{T102}, R^{T111}, and R^{T112} each independently represent a halogen atom, an alkyl group having 1 or more and 5 or less carbon atoms, an alkoxy group having 1 or more and 5 or less carbon atoms, an amino group substituted with an alkyl group having 1 or more and 2 or less carbon atoms, a substituted or unsubstituted aryl group, -C(R^{T12})=C(R^{T13})(R^{T14}), or -CH=CH-CH=C(R^{T15})(R^{T16}), and R^{T12}, R^{T13}, R^{T14}, R^{T15}, and R^{T16} each independently represent a hydrogen atom, a substituted or unsubstituted alkyl group, or a substituted or unsubstituted aryl group. Tm1, Tm2, Tn1, and Tn2 each independently represent an integer of 0 or greater and 2 or less.

Examples of the substituent of each group described above include a halogen atom, an alkyl group having 1 or more and 5 or less carbon atoms, and an alkoxy group having 1 or more and 5 or less carbon atoms. Further, examples of the substituent of each group described above include a substituted amino group substituted with an alkyl group having 1 or more and 3 or less carbon atoms.

Here, among the triarylamine derivative represented by Structural Formula (a-1) and the benzidine derivative represented by Structural Formula (a-2), for example, a triarylamine derivative having "-C₆H₄-CH=CH-CH=C(R^{T7})(R^{T8})" and a benzidine derivative having "-CH=CH-CH=C(R^{T15})(R^{T16})" are particularly preferable from the viewpoint of the charge mobility.

As the polymer charge transport material, known materials having charge transport properties, such as poly-N-vinylcarbazole and polysilane, can be used. Particularly, for example, a polyester-based polymer charge transport material is particularly preferable. The polymer charge transport material may be used alone or in combination of binder resins.

Examples of the binder resin used for the charge transport layer include a polycarbonate resin, a polyester resin, a polyarylate resin, a methacrylic resin, an acrylic resin, a polyvinyl chloride resin, a polyvinylidene chloride resin, a polystyrene resin, a polyvinyl acetate resin, a styrene-butadiene copolymer, a vinylidene chloride-acrylonitrile copolymer, a vinyl chloride-vinyl acetate copolymer, a vinyl chloride-vinyl acetate-maleic anhydride copolymer, a silicone resin, a silicone alkyd resin, a phenol-formaldehyde resin, a styrene-alkyd resin, poly-N-vinylcarbazole, and polysilane. Among these, for example, a polycarbonate resin or a polyarylate resin is preferable as the binder resin. These binder resins may be used alone or in combination of two or more kinds thereof.

The blending ratio between the charge transport material and the binder resin is, for example, preferably 10:1 to 1:5 in terms of the mass ratio.

The charge transport layer may also contain other known additives.

The formation of the charge transport layer is not particularly limited, and a known forming method is used. For example, a coating film of a coating solution for forming a charge transport layer in which the above-described components are added to a solvent is formed, and the coating film is dried and, as necessary, heated.

Examples of the solvent for preparing the coating solution for forming a charge transport layer include typical organic solvents, for example, aromatic hydrocarbons such as benzene, toluene, xylene, and chlorobenzene; ketones such as acetone and 2-butanone; halogenated aliphatic hydrocarbons such as methylene chloride, chloroform, and ethylene chloride; and cyclic or linear ethers such as tetrahydrofuran and ethyl ether. These solvents are used alone or in the form of a mixture of two or more kinds thereof.

Examples of the coating method of coating the charge generation layer with the coating solution for forming a charge transport layer include typical methods such as a blade coating method, a wire bar coating method, a spray coating method, a dip coating method, a bead coating method, an air knife coating method, and a curtain coating method.

The layer thickness of the charge transport layer is set to be, for example, preferably in a range of 5 µm or greater and 50 µm or less and more preferably in a range of 10 µm or greater and 30 µm or less.

### [Protective Layer]

A protective layer is provided on the photosensitive layer as necessary. The protective layer is provided, for example, for the purpose of preventing a chemical change in the photosensitive layer during charging and further improving the mechanical strength of the photosensitive layer.

Therefore, for example, a layer formed of a cured film (crosslinked film) may be applied to the protective layer. Examples of these layers include the layers described in the items 1) and 2) below.
1) A layer formed of a cured film of a composition containing a reactive group-containing charge transport material having a reactive group and a charge-transporting skeleton in an identical molecule (that is, a layer containing a polymer or a crosslinked body of the reactive group-containing charge transport material)
2) A layer formed of a cured film of a composition containing a non-reactive charge transport material and a reactive group-containing non-charge transport material containing a reactive group without having a charge-transporting skeleton (that is, a layer containing the non-reactive charge transport material and a polymer or crosslinked body of the reactive group-containing non-charge transport material)

Examples of the reactive group of the reactive group-containing charge transport material include known reactive groups such as a chain polymerizable group, an epoxy group, - OH, -OR [here, R represents an alkyl group], -NH₂, -SH, -COOH, and -SiR^{Q1}_{3-Qn}(OR^{Q2})_{Qn} [here, R^{Q1} represents a hydrogen atom, an alkyl group, or a substituted or unsubstituted aryl group, R^{Q2} represents a hydrogen atom, an alkyl group, or a trialkylsilyl group, and Qn represents an integer of 1 to 3].

The chain polymerizable group is not particularly limited as long as the group is a functional group capable of radical polymerization and is, for example, a functional group containing a group having at least a carbon double bond. Specific examples thereof include a vinyl group, a vinyl ether group, a vinyl thioether group, a styryl group (vinylphenyl group), an acryloyl group, a methacryloyl group, and a group containing at least one selected from derivatives thereof. Among these, from the viewpoint that the reactivity is excellent, for example, a vinyl group, a styryl group (vinylphenyl group), an acryloyl group, a methacryloyl group, and a group containing at least one selected from derivatives thereof are preferable as the chain polymerizable group.

The charge-transporting skeleton of the reactive group-containing charge transport material is not particularly limited as long as the skeleton is a known structure in the electrophotographic photoreceptor, and examples thereof include a structure conjugated with a nitrogen atom, which is a skeleton derived from a nitrogen-containing positive hole-transporting compound such as a triarylamine-based compound, a benzidine-based compound, or a hydrazone-based compound. Among these, for example, a triarylamine skeleton is preferable.

The reactive group-containing charge transport material having the reactive group and the charge-transporting skeleton, the non-reactive charge transport material, and the reactive group-containing non-charge transport material may be selected from known materials.

The protective layer may also contain other known additives.

The formation of the protective layer is not particularly limited, and a known forming method is used. For example, a coating film of a coating solution for forming a protective layer in which the above-described components are added to a solvent is formed, and the coating film is dried and, as necessary, subjected to a curing treatment such as heating.

Examples of the solvent for preparing the coating solution for forming a protective layer include an aromatic solvent such as toluene or xylene; a ketone-based solvent such as methyl ethyl ketone, methyl isobutyl ketone, or cyclohexanone; an ester-based solvent such as ethyl acetate or butyl acetate; an ether-based solvent such as tetrahydrofuran or dioxane; a cellosolve-based solvent such as ethylene glycol monomethyl ether; and an alcohol-based solvent such as isopropyl alcohol or butanol. These solvents are used alone or in the form of a mixture of two or more kinds thereof.

The coating solution for forming a protective layer may be a solvent-less coating solution.

Examples of the method of coating the photosensitive layer (such as the charge transport layer) with the coating solution for forming a protective layer include typical coating methods such as a dip coating method, a push-up coating method, a wire bar coating method, a spray coating method, a blade coating method, an air knife coating method, and a curtain coating method.

The film thickness of the protective layer is set to be, for example, preferably in a range of 1 µm or greater and 20 µm or less and more preferably in a range of 2 µm or greater and 10 µm or less.

### [Single Layer Type Photosensitive Layer]

The single layer type photosensitive layer (charge generation/charge transport layer) is, for example, a layer containing a charge generation material, a charge transport material, and as necessary, a binder resin and other known additives. These materials are the same as the materials described in the sections of the charge generation layer and the charge transport layer.

The content of the charge generation material in the single layer type photosensitive layer may be, for example, 0.1% by mass or greater and 10% by mass or less and preferably 0.8% by mass or greater and 5% by mass or less with respect to the total solid content. Further, the content of the charge transport material in the single layer type photosensitive layer may be, for example, 5% by mass or greater and 50% by mass or less with respect to the total solid content.

The method of forming the single layer type photosensitive layer is the same as the method of forming the charge generation layer or the charge transport layer.

The layer thickness of the single layer type photosensitive layer may be, for example, 5 µm or greater and 50 µm or less and is preferably 10 µm or greater and 40 µm or less.

### <Method of Producing Electrophotographic Photoreceptor>

An example of a method of producing the photoreceptor according to the present exemplary embodiment may include reproducing the conductive substrate by removing all the layers on the conductive substrate from the photoreceptor after use (conductive substrate reproducing step), forming an undercoat layer on the reproduced conductive substrate (undercoat layer forming step), and forming a photosensitive layer on the undercoat layer (photosensitive layer forming step).

The method of producing the photoreceptor according to the present exemplary embodiment may further include forming a protective layer on the photosensitive layer (protective layer forming step).

As an example of the method of producing the photoreceptor according to the present exemplary embodiment, a reproduced conductive substrate having an integrated value S of 0.02 or greater and 0.10 or less is used.

### [Conductive Substrate Reproducing Step]

In the conductive substrate reproducing step, each layer may be sequentially removed without collectively removing all the layers on the conductive substrate.

A method of removing all the layers or each layer on the conductive substrate is not limited, but a water jet method of allowing high-speed water to collide with the photoreceptor to peel off all the layers or each layer is preferable. The water jet is less likely to chemically modify or contaminate the surface of the conductive substrate.

Micro-unevenness may occur on the surface of the conductive substrate reproduced by peeling off all the layers or each layer on the conductive substrate with a water jet. In an example of the exemplary embodiment of the conductive substrate reproduced by a water jet method, the integrated value S is 0.02 or greater and 0.10 or less.

The water pressure, the water amount, and the water temperature of the water jet are not limited, and may be set according to the material of the conductive substrate, the composition and the layer thickness of each layer to be peeled off, and the time and the power required for the peeling. The water pressure, the water amount, and the water temperature of the water jet are set as the water pressure, the water amount, and the water temperature, at which the integrated value S of the reproduced conductive substrate is 0.10 or less.

The water used for the water jet may be water to which a surfactant has been added.

The water jet may be combined with other peeling means. For example, the photoreceptor after use is dipped in a solvent or the photoreceptor after use is heated, and all or each of the softened layers may be peeled off by a water jet. Alternatively, for example, the water jet may be performed for finishing after some of the layers are removed by air blast.

Examples of the material of the reproduced conductive substrate include a metal such as aluminum, copper, zinc, chromium, nickel, molybdenum, vanadium, indium, gold, or platinum; an alloy such as stainless steel; a conductive compound such as a conductive polymer or indium oxide; paper coated, vapor-deposited, or laminated with a metal or an alloy; and a resin sheet. Here, the term "conductive" denotes that the volume resistivity is less than 1×10¹³ Ω·cm.

Examples of the shape of the reproduced conductive substrate include a roll, a belt, a drum, a sheet, and a plate.

The reproduced conductive substrate may be subjected to an acid treatment or a boehmite treatment to form a coating film.

### [Undercoat Layer Forming Step]

The undercoat layer is formed, for example, by preparing a coating solution for forming an undercoat layer, coating the conductive substrate with the coating solution for forming an undercoat layer to form a coating film, drying the coating film, and as necessary, heating the coating film. The exemplary embodiment of each step is as described above for the undercoat layer.

In a case where the photoreceptor according to the first exemplary embodiment is produced, an undercoat layer having a layer thickness of 10 µm or greater is formed in the undercoat layer forming step. The ranges of the layer thickness of the undercoat layer are as described above for the first exemplary embodiment.

In a case where the photoreceptor according to the second exemplary embodiment is produced, an undercoat layer containing metal oxide particles is formed in the undercoat layer forming step. The exemplary embodiment of the metal oxide particles is as described above for the second exemplary embodiment.

The exemplary embodiment of the photosensitive layer forming step is as described above for the charge generation layer, the charge transport layer, and the single layer type photosensitive layer.

The exemplary embodiment of the protective layer forming step is as described above for the protective layer.

### <Image Forming Apparatus and Process Cartridge>

An image forming apparatus according to the present exemplary embodiment includes the electrophotographic photoreceptor, a charging device that charges a surface of the electrophotographic photoreceptor, an electrostatic latent image forming device that forms an electrostatic latent image on the charged surface of the electrophotographic photoreceptor, a developing device that develops the electrostatic latent image formed on the surface of the electrophotographic photoreceptor with a developer containing a toner to form a toner image, and a transfer device that transfers the toner image to a surface of a recording medium. Further, the electrophotographic photoreceptor according to the present exemplary embodiment is employed as the electrophotographic photoreceptor.

As the image forming apparatus according to the present exemplary embodiment, known image forming apparatuses such as an apparatus including a fixing device that fixes the toner image transferred to the surface of a recording medium; a direct transfer type apparatus that transfers the toner image formed on the surface of the electrophotographic photoreceptor directly to the recording medium; an intermediate transfer type apparatus that primarily transfers the toner image formed on the surface of the electrophotographic photoreceptor to the surface of the intermediate transfer member and secondarily transfers the toner image transferred to the surface of the intermediate transfer member to the surface of the recording medium; an apparatus including a cleaning device that cleans the surface of the electrophotographic photoreceptor after the transfer of the toner image and before the charging; an apparatus including a charge erasing device that erases the charges on the surface of the electrophotographic photoreceptor by applying the charge erasing light after the transfer of the toner image and before the charging; and an apparatus including an electrophotographic photoreceptor heating member for increasing the temperature of the electrophotographic photoreceptor and decreasing the relative temperature are employed.

In a case of the intermediate transfer type apparatus, the transfer device is, for example, configured to include an intermediate transfer member having a surface onto which the toner image is transferred, a primary transfer device primarily transferring the toner image formed on the surface of the electrophotographic photoreceptor to the surface of the intermediate transfer member, and a secondary transfer device secondarily transferring the toner image transferred to the surface of the intermediate transfer member to the surface of the recording medium.

The image forming apparatus according to the present exemplary embodiment may be any of a dry development type image forming apparatus or a wet development type (development type using a liquid developer) image forming apparatus.

In the image forming apparatus according to the present exemplary embodiment, for example, the portion including the electrophotographic photoreceptor may have a cartridge structure (process cartridge) that is attachable to and detachable from the image forming apparatus. As the process cartridge, for example, a process cartridge including the electrophotographic photoreceptor according to the present exemplary embodiment is preferably used. The process cartridge may include, for example, at least one selected from the group consisting of a charging device, an electrostatic latent image forming device, a developing device, and a transfer device in addition to the electrophotographic photoreceptor.

Hereinafter, an example of the image forming apparatus according to the present exemplary embodiment will be described, but the present exemplary embodiment is not limited thereto. Further, main parts shown in the figures will be described, but description of other parts will not be provided.

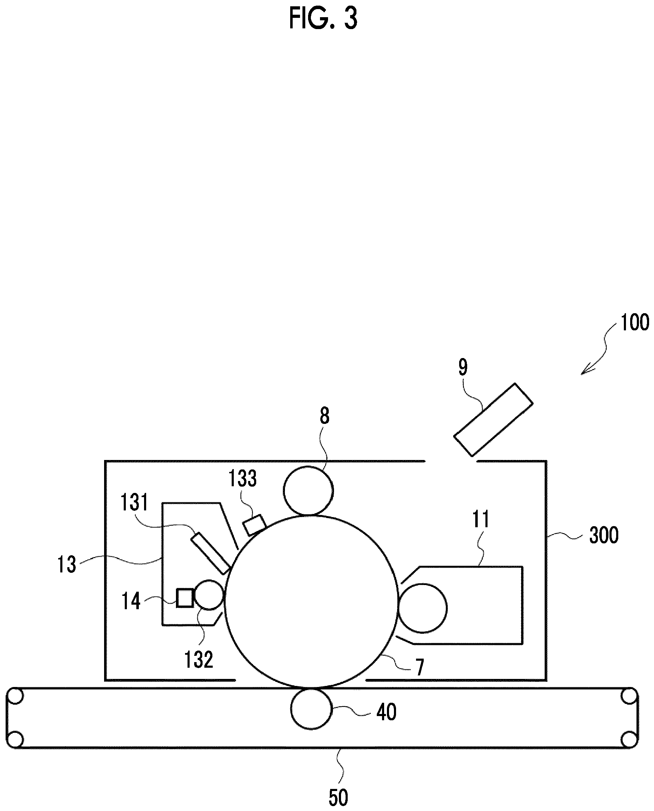

Fig. 3 is a schematic configuration view showing an example of an image forming apparatus according to the present exemplary embodiment.

As shown in Fig. 3, an image forming apparatus 100 according to the present exemplary embodiment includes a process cartridge 300 including an electrophotographic photoreceptor 7, an exposure device 9 (an example of an electrostatic latent image forming device), a transfer device 40 (primary transfer device), and an intermediate transfer member 50. In the image forming apparatus 100, the exposure device 9 is disposed at a position that can be exposed to the electrophotographic photoreceptor 7 from an opening portion of the process cartridge 300, the transfer device 40 is disposed at a position that faces the electrophotographic photoreceptor 7 via the intermediate transfer member 50, and the intermediate transfer member 50 is disposed such that a part of the intermediate transfer member 50 is in contact with the electrophotographic photoreceptor 7. Although not shown, the image forming apparatus also includes a secondary transfer device that transfers the toner image transferred to the intermediate transfer member 50 to a recording medium (for example, paper). The intermediate transfer member 50, the transfer device 40 (primary transfer device), and the secondary transfer device (not shown) correspond to an example of the transfer device.

The process cartridge 300 in Fig. 3 integrally supports the electrophotographic photoreceptor 7, a charging device 8 (an example of the charging device), a developing device 11 (an example of the developing device), and a cleaning device 13 (an example of the cleaning device) in a housing. The cleaning device 13 has a cleaning blade (an example of the cleaning member) 131, and the cleaning blade 131 is disposed to come into contact with the surface of the electrophotographic photoreceptor 7. The cleaning member may be a conductive or insulating fibrous member instead of the aspect of the cleaning blade 131, and may be used alone or in combination with the cleaning blade 131.

Fig. 3 shows an example of an image forming apparatus including a fibrous member 132 (roll shape) that supplies a lubricant 14 to the surface of the electrophotographic photoreceptor 7 and a fibrous member 133 (flat brush shape) that assists cleaning, but these are disposed as necessary.

Hereinafter, each configuration of the image forming apparatus according to the present exemplary embodiment will be described.

### - Charging Device -

As the charging device 8, for example, a contact-type charger formed of a conductive or semi-conductive charging roller, a charging brush, a charging film, a charging rubber blade, a charging tube, or the like is used. Further, a known charger such as a non-contact type roller charger, or a scorotron charger or a corotron charger using corona discharge is also used.

### - Exposure Device -

Examples of the exposure device 9 include an optical system device that exposes the surface of the electrophotographic photoreceptor 7 to light such as a semiconductor laser beam, LED light, and liquid crystal shutter light in a predetermined image pattern. The wavelength of the light source is within the spectral sensitivity region of the electrophotographic photoreceptor. As the wavelength of a semiconductor laser, near infrared, which has an oscillation wavelength in the vicinity of 780 nm, is mostly used. However, the wavelength is not limited thereto, and a laser having an oscillation wavelength of an approximately 600 nm level or a laser having an oscillation wavelength of 400 nm or greater and 450 nm or less as a blue laser may also be used. Further, a surface emission type laser light source capable of outputting a multi-beam is also effective for forming a color image.

### - Developing Device -

Examples of the developing device 11 include a typical developing device that performs development in contact or non-contact with the developer. The developing device 11 is not particularly limited as long as the developing device has the above-described functions, and is selected depending on the purpose thereof. Examples of the developing device include known developing machines having a function of attaching a one-component developer or a two-component developer to the electrophotographic photoreceptor 7 using a brush, a roller, or the like. Among these, for example, a developing device formed of a developing roller having a surface on which a developer is held is preferably used.

The developer used in the developing device 11 may be a one-component developer containing only a toner or a two-component developer containing a toner and a carrier. Further, the developer may be magnetic or non-magnetic. Known developers are employed as these developers.

### - Cleaning Device -

As the cleaning device 13, a cleaning blade type device including the cleaning blade 131 is used. In addition to the cleaning blade type device, a fur brush cleaning type device or a simultaneous development cleaning type device may be employed.

### - Transfer Device -

Examples of the transfer device 40 include a known transfer charger such as a contact type transfer charger using a belt, a roller, a film, or a rubber blade, and a scorotron transfer charger or a corotron transfer charger using corona discharge.

### - Intermediate Transfer Member -

As the intermediate transfer member 50, a belt-like intermediate transfer member (intermediate transfer belt) containing semi-conductive polyimide, polyamide-imide, polycarbonate, polyarylate, polyester, rubber, or the like is used. Further, as the form of the intermediate transfer member, a drum-like intermediate transfer member may be used in addition to the belt-like intermediate transfer member.

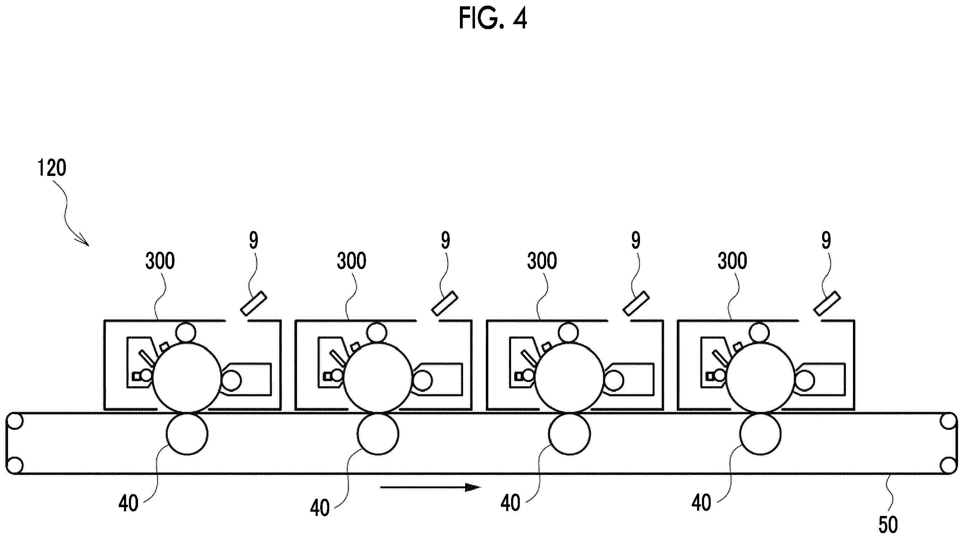

Fig. 4 is a schematic configuration view showing an example of an image forming apparatus according to the present exemplary embodiment.

An image forming apparatus 120 shown in Fig. 4 is a tandem type multicolor image forming apparatus on which four process cartridges 300 are mounted. The image forming apparatus 120 is formed such that four process cartridges 300 are arranged in parallel on the intermediate transfer member 50, and one electrophotographic photoreceptor is used for each color. The image forming apparatus 120 has the same configuration as the image forming apparatus 100 except that the image forming apparatus 120 is of a tandem type.

### Examples

Hereinafter, exemplary embodiments of the invention will be described in detail based on examples, but the exemplary embodiments of the invention are not limited to the examples.

In the following description, "parts" and "%" are on a mass basis unless otherwise specified.

In the following description, the synthesis, the production, the treatment, the measurement, and the like are carried out at room temperature (25°C ± 3°C) unless otherwise specified.

### <Reproduction of Conductive Substrate>

A photoreceptor after use is prepared. The photoreceptor is provided with an aluminum cylindrical tube used for producing the photoreceptor. The integrated value S of the new aluminum cylindrical tube used for producing the photoreceptor is less than 0.02.

All layers are removed from the photoreceptor after use using a water jet to reproduce the conductive substrate. Conductive substrates (1) to (3) with integrated values S different from each other are obtained by changing the water pressure of the water jet. The integrated values S of each of the conductive substrates (1) to (3) are listed in Table 1.

The conductive substrates (1) to (3) are aluminum cylindrical tubes having an outer diameter of 30 mm, a length of 250 mm, and a thickness of 1 mm.

### <<First Exemplary Embodiment>>

### <Example 1>

### [Formation of Undercoat Layer]

20 parts of a blocked isocyanate (trade name, SUMIDUR BL3175, manufactured by Sumitomo Bayer Urethane Co., Ltd., solid content of 75%) and 7.5 parts of a butyral resin (S-LEC BL-1, manufactured by Sekisui Chemical Co., Ltd., polyvinyl butyral) are dissolved in 150 parts of methyl ethyl ketone. 34 parts of a mixture of the perinone compound (1-1) and the perinone compound (2-1) (mass ratio of 50:50) is mixed with the solution and dispersed with a sand mill using glass beads having a diameter of 1 mm for 10 hours, thereby obtaining a dispersion liquid. 0.005 parts of bismuth carboxylate (K-KAT XK-640, manufactured by King Industries, Inc.) is added to the dispersion liquid, thereby obtaining a coating solution for forming an undercoat layer. The outer peripheral surface of the conductive substrate (1) is dipped in and coated with this coating solution, and the coating solution is dried and cured at 160°C for 60 minutes, thereby forming an undercoat layer. The layer thickness of the undercoat layer is as listed in Table 1.

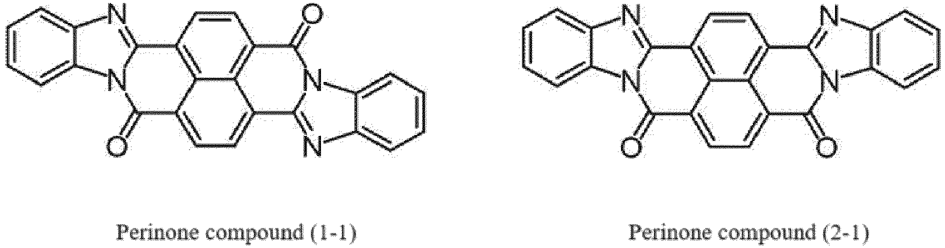

### [Formation of Charge Generation Layer]

A mixture of 15 parts of hydroxygallium phthalocyanine as a charge generation material (having diffraction peaks at positions where Bragg angles (2θ ± 0.2°) in the X-ray diffraction spectrum using Cukα characteristic X-rays are at least 7.5°, 9.9°, 12.5, 16.3°, 18.6°, 25. 1°, and 28.3°), 10 parts of a vinyl chloride-vinyl acetate copolymer resin (trade name: VMCH, Nippon Unicar Company Limited) as a binder resin, and 200 parts of n-butyl acetate is dispersed in a sand mill for 4 hours using glass beads having a diameter of 1 mm. 175 parts of n-butyl acetate and 180 parts of methyl ethyl ketone are added to the dispersion liquid, and the mixture is stirred, thereby obtaining a coating solution for forming a charge generation layer. The undercoat layer is dipped in and coated with the coating solution, and the coating solution is dried at room temperature, thereby forming a charge generation layer having a layer thickness of 0.25 µm.

### [Formation of Charge Transport Layer]

60 parts of a polycarbonate resin (1) (viscosity average molecular weight of 40,000, numerical values in the following structural formula denote the molar ratio) and 40 parts of CTM-1 which is a charge transport material are dissolved in a mixed solvent obtained by mixing 270 parts of tetrahydrofuran and 30 parts of toluene, thereby obtaining a coating solution for forming a charge transport layer. The charge generation layer is dipped in and coated with the coating solution, the coating film is dried at a temperature of 150°C for 30 minutes, thereby forming a charge transport layer having a layer thickness of 20 µm.

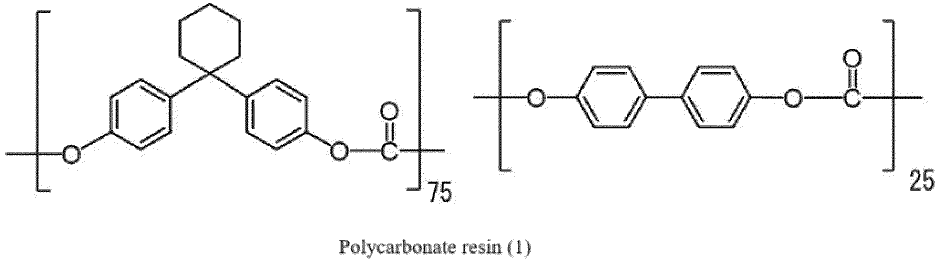

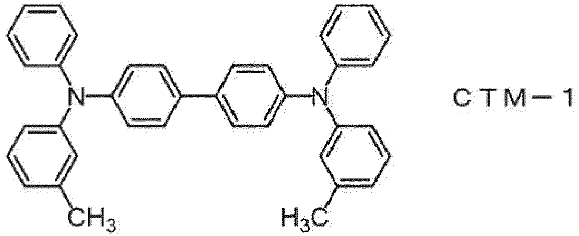

In the formulae, the numerical values denote the molar ratio (mol%).

### <Examples 2 to 9>

Each photoreceptor is prepared in the same manner as in Example 1, except that the kind of the conductive substrate and the layer thickness of the undercoat layer are changed to the specifications listed in Table 1.

### <Comparative Examples 1 to 3>

Each photoreceptor is prepared in the same manner as in Example 1, except that the kind of the conductive substrate and the layer thickness of the undercoat layer are changed to the specifications listed in Table 1.

### <<Second Exemplary Embodiment>>

### <Example 10>

A photoreceptor is prepared in the same manner as in Example 1 except that the formation of the undercoat layer is changed as described below.

### [Formation of Undercoat Layer]

100 parts of zinc oxide (average particle diameter of 70 nm, manufactured by Tayca Corporation) is stirred and mixed with 500 parts of toluene, 1.3 parts of a silane coupling agent (trade name: KBM603, manufactured by Shin-Etsu Chemical Co., Ltd., N-2-(aminoethyl)-3-aminopropyltrimethoxysilane) is added thereto, and the mixture is stirred for 2 hours. Thereafter, toluene is distilled off under reduced pressure and baked at 120°C for 3 hours to obtain zinc oxide subjected to a surface treatment with a silane coupling agent.

110 parts of the surface-treated zinc oxide is stirred and mixed with 500 parts of tetrahydrofuran, a solution obtained by dissolving 0.6 parts of alizarin in 50 parts of tetrahydrofuran is added thereto, and the mixture is stirred at 50°C for 5 hours. Thereafter, the solid content is separated by filtration by carrying out filtration under reduced pressure and dried at 60°C under reduced pressure, thereby obtaining zinc oxide with alizarin.

100 parts of a solution obtained by dissolving 60 parts of the zinc oxide with alizarin, 13.5 parts of a curing agent (blocked isocyanate, trade name: SUMIDUR BL3175, manufactured by Sumitomo Bayer Urethane Co., Ltd., solid content of 25% by mass), and 10 parts of a butyral resin (trade name: S-LEC BM-1, manufactured by Sekisui Chemical Co., Ltd.) in 68 parts of methyl ethyl ketone is mixed with 5 parts of methyl ethyl ketone, and the solution is dispersed in a sand mill for 2 hours using glass beads with a diameter of 1 mmcp, thereby obtaining a dispersion liquid. 0.005 parts of dioctyltin dilaurate as a catalyst is added to the dispersion liquid to obtain a coating solution for forming an undercoat layer. The outer peripheral surface of the conductive substrate (1) is dipped in and coated with this coating solution, and the coating solution is dried and cured at 170°C for 40 minutes, thereby forming an undercoat layer. The layer thickness of the undercoat layer is as listed in Table 1.

### <Examples 11 to 17>

Each photoreceptor is prepared in the same manner as in Example 10 except that the kind of the conductive substrate, the layer thickness of the undercoat layer, and the kind of the metal oxide particles are changed to the specifications listed in Table 1.

### <Performance Evaluation of Photoreceptor>

### [Image Graininess]

Halftone images of a cyan color are formed side by side with an image density at intervals of 5% from 5% to 100% on A3 size plain paper in an environment of a temperature of 23°C and a relative humidity of 55%, and the sense of graininess is visually evaluated. The results are listed in Table 1.
G1: Images do not show a sense of graininess.
G2: Images with a low density slightly show a sense of graininess.
G3: Images with a low density and a medium density slightly show a sense of graininess.
G4: Images with low to high densities shown a sense of graininess.

**[Table 1]**

| | Conductive substrate | | Undercoat layer | | | | Image quality evaluation |
|---|---|---|---|---|---|---|---|
| | Type | Integrated value S | Layer thickness | Metal oxide particles | | | Graininess of image |
| | | | | Type | Average particle diameter | Content | |
| | - | - | µm | - | nm | mass% | - |
| Comparative example 1 | (1) | 0.05 | 5 | - | - | 0 | G4 |
| Example 1 | (1) | 0.05 | 10 | - | - | 0 | G3 |
| Example 2 | (1) | 0.05 | 20 | - | - | 0 | G2 |
| Example 3 | (1) | 0.05 | 25 | - | - | 0 | G1 |
| Comparative example 2 | (2) | 0.10 | 5 | - | - | 0 | G4 |
| Example 4 | (2) | 0.10 | 10 | - | - | 0 | G3 |
| Example 5 | (2) | 0.10 | 20 | - | - | 0 | G2 |
| Example 6 | (2) | 0.10 | 25 | - | - | 0 | G2 |
| Comparative example 3 | (3) | 0.02 | 5 | - | - | 0 | G4 |
| Example 7 | (3) | 0.02 | 10 | - | - | 0 | G2 |
| Example 8 | (3) | 0.02 | 20 | - | - | 0 | G1 |
| Example 9 | (3) | 0.02 | 25 | - | - | 0 | G1 |
| Example 10 | (1) | 0.05 | 5 | Zinc oxide | 70 | 82 | G2 |
| Example 11 | (1) | 0.05 | 10 | Zinc oxide | 70 | 82 | G1 |
| Example 12 | (1) | 0.05 | 20 | Zinc oxide | 70 | 82 | G1 |
| Example 13 | (1) | 0.05 | 25 | Zinc oxide | 70 | 82 | G1 |
| Example 14 | (1) | 0.05 | 25 | Titanium oxide | 35 | 82 | G1 |
| Example 15 | (1) | 0.05 | 25 | Tin oxide | 25 | 82 | G1 |
| Example 16 | (2) | 0.10 | 25 | Zinc oxide | 70 | 82 | G1 |
| Example 17 | (3) | 0.02 | 25 | Zinc oxide | 70 | 82 | G1 |

The electrophotographic photoreceptor, the method of producing the electrophotographic photoreceptor, the process cartridge, and the image forming apparatus of the present disclosure include the following aspects.
(((1))) An electrophotographic photoreceptor comprising:
   a conductive substrate;
   an undercoat layer disposed on the conductive substrate; and
   a photosensitive layer disposed on the undercoat layer,
   wherein an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and
   the undercoat layer has a layer thickness of 10 µm or greater.
(((2))) The electrophotographic photoreceptor according to (((1))),
   wherein the undercoat layer has a layer thickness of 20 µm or greater.
(((3))) An electrophotographic photoreceptor comprising:
   a conductive substrate;
   an undercoat layer disposed on the conductive substrate; and
   a photosensitive layer disposed on the undercoat layer,
   wherein an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and
   the undercoat layer may contain metal oxide particles.
(((4))) The electrophotographic photoreceptor according to (((3))),
   wherein the metal oxide particles include at least one selected from the group consisting of zinc oxide particles, titanium oxide particles, and tin oxide particles.
(((5))) The electrophotographic photoreceptor according to (((3))) or (((4))),
   wherein the metal oxide particles have an average particle diameter of 10 nm or greater and 80 nm or less.
(((6))) The electrophotographic photoreceptor according to any one of (((3))) to (((5))),
   wherein a mass proportion of the metal oxide particles in the undercoat layer is 60% by mass or greater and 95% by mass or less.
(((7))) A method of producing the electrophotographic photoreceptor according to any one of (((1))) to (((6))), the method comprising:
   removing all layers on the conductive substrate from the electrophotographic photoreceptor after use with a water jet to reproduce the conductive substrate;
   forming an undercoat layer on the reproduced conductive substrate; and
   forming a photosensitive layer on the undercoat layer.
(((8))) A process cartridge comprising:
   the electrophotographic photoreceptor according to any one of (((1))) to (((6))),
   wherein the process cartridge is attachable to and detachable from an image forming apparatus.
(((9))) An image forming apparatus comprising:
   the electrophotographic photoreceptor according to any one of (((1))) to (((6)));
   a charging device that charges a surface of the electrophotographic photoreceptor;
   an electrostatic latent image forming device that forms an electrostatic latent image on the charged surface of the electrophotographic photoreceptor;
   a developing device that develops the electrostatic latent image formed on the surface of the electrophotographic photoreceptor with a developer containing a toner to form a toner image; and
   a transfer device that transfers the toner image to a surface of a recording medium.

According to (((1))), it is possible to provide an electrophotographic photoreceptor that forms an image with excellent graininess as compared with an electrophotographic photoreceptor in which an undercoat layer has a layer thickness of less than 10 µm and does not contain metal oxide particles.

According to (((2))), it is possible to provide an electrophotographic photoreceptor that forms an image with excellent graininess as compared with an electrophotographic photoreceptor in which an undercoat layer has a layer thickness of less than 20 µm.

According to (((3))), (((4))), (((5))) or (((6))), it is possible to provide an electrophotographic photoreceptor that forms an image with excellent graininess as compared with an electrophotographic photoreceptor in which an undercoat layer has a layer thickness of less than 10 µm and does not contain metal oxide particles.

According to (((7))), it is possible to provide a method of producing an electrophotographic photoreceptor that forms an image with excellent graininess.

According to (((8))), it is possible to provide a process cartridge that forms an image with excellent graininess as compared with a process cartridge including an electrophotographic photoreceptor in which an undercoat layer has a layer thickness of less than 10 µm and does not contain metal oxide particles.

According to (((9))), it is possible to provide an image forming apparatus that forms an image with excellent graininess as compared with an image forming apparatus including an electrophotographic photoreceptor in which an undercoat layer has a layer thickness of less than 10 µm and does not contain metal oxide particles.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: conductive substrate
2: undercoat layer
3: charge generation layer
4: charge transport layer
5: photosensitive layer
10A: photoreceptor
10B: photoreceptor
7: electrophotographic photoreceptor
8: charging device
9: exposure device
11: developing device
13: cleaning device
14: lubricant
40: transfer device
50: intermediate transfer member
100: image forming apparatus
120: image forming apparatus
131: cleaning blade
132: fibrous member (roll shape)
133: fibrous member (flat brush shape)
300: process cartridge

## Claims

1. An electrophotographic photoreceptor comprising:
a conductive substrate;
an undercoat layer disposed on the conductive substrate; and
a photosensitive layer disposed on the undercoat layer,
wherein an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and
the undercoat layer has a layer thickness of 10 µm or greater.

2. The electrophotographic photoreceptor according to claim 1,
wherein the undercoat layer has a layer thickness of 20 µm or greater.

3. An electrophotographic photoreceptor comprising:
a conductive substrate;
an undercoat layer disposed on the conductive substrate; and
a photosensitive layer disposed on the undercoat layer,
wherein an integrated value of an intensity in a period range of 0.01 mm or greater and 0.1 mm or less in a power spectrum obtained by performing fast Fourier transform on a roughness curve of an outer peripheral surface of the conductive substrate in an axial direction is 0.02 or greater and 0.10 or less, and
the undercoat layer may contain metal oxide particles.

4. The electrophotographic photoreceptor according to claim 3,
wherein the metal oxide particles include at least one selected from the group consisting of zinc oxide particles, titanium oxide particles, and tin oxide particles.

5. The electrophotographic photoreceptor according to claim 3 or 4,
wherein the metal oxide particles have an average particle diameter of 10 nm or greater and 80 nm or less.

6. The electrophotographic photoreceptor according to any one of claims 3 to 5,
wherein a mass proportion of the metal oxide particles in the undercoat layer is 60% by mass or greater and 95% by mass or less.

7. A method of producing the electrophotographic photoreceptor according to any one of claims 1 to 6, the method comprising:
removing all layers on the conductive substrate from the electrophotographic photoreceptor after use with a water jet to reproduce the conductive substrate;
forming an undercoat layer on the reproduced conductive substrate; and
forming a photosensitive layer on the undercoat layer.

8. A process cartridge comprising:
the electrophotographic photoreceptor according to any one of claims 1 to 6,
wherein the process cartridge is attachable to and detachable from an image forming apparatus.

9. An image forming apparatus comprising:
the electrophotographic photoreceptor according to any one of claims 1 to 6;
a charging device that charges a surface of the electrophotographic photoreceptor;
an electrostatic latent image forming device that forms an electrostatic latent image on the charged surface of the electrophotographic photoreceptor;
a developing device that develops the electrostatic latent image formed on the surface of the electrophotographic photoreceptor with a developer containing a toner to form a toner image; and
a transfer device that transfers the toner image to a surface of a recording medium.
